(19) Europäisches Patentamt

European Patent Office

Office européen des brevets

(11) Veröffentlichungsnummer: **0 027 963**
**B1**

(12) **EUROPÄISCHE PATENTSCHRIFT**

(45) Veröffentlichungstag der Patentschrift: **09.01.85**

(21) Anmeldenummer: **80106298.5**

(22) Anmeldetag: **16.10.80**

(51) Int. Cl.⁴: **G 11 B 15/29, G 11 B 15/43**

(54) **Verfahren und Einrichtung zur Bandspannungserzeugung in einem Magnetbandlaufwerk.**

(30) Priorität: **24.10.79 DE 2942950**

(43) Veröffentlichungstag der Anmeldung:
**06.05.81 Patentblatt 81/18**

(45) Bekanntmachung des Hinweises auf die
Patenterteilung:
**09.01.85 Patentblatt 85/02**

(84) Benannte Vertragsstaaten:
**AT DE FR GB NL**

(56) Entgegenhaltungen:
**CH-A- 148 790**
**DE-A-2 364 566**
**DE-C- 762 030**
**US-A-3 370 803**
**US-A-3 487 175**
**US-A-3 593 945**
**US-A-3 593 947**
**US-A-4 093 150**

(73) Patentinhaber: **BASF Aktiengesellschaft**
**Carl-Bosch-Strasse 38**
**D-6700 Ludwigshafen (DE)**

(72) Erfinder: **Schmid, Hans**
**Parkstrasse 9**
**D-6703 Limburgerhof (DE)**
Erfinder: **Becker, Klaus**
**Silcherstrasse 6**
**D-6700 Ludwigshafen (DE)**
Erfinder: **Leuchtmann, Guenter**
**Gustav-Nachtigal-Strasse 68**
**D-6800 Mannheim 81 (DE)**
Erfinder: **Schoettle, Klaus**
**Ladenburger Strasse 70**
**D-6900 Heidelberg (DE)**

Courier Press, Leamington Spa, England.

# Beschreibung

Die Erfindung betrifft ein Verfahren zur Erzeugung der Bandspannung in einem nach den Kontaktwickelprinzip arbeitenden Magnetbandlaufwerk, bei dem eine bandabgebende und eine bandaufnehmende Magnetbandspule von zumindest einer, mit einem elastisch verformbaren Umfangsbelag versehenen Antriebsrolle durch Kontaktdruck an den Kontakstellen zwischen den Umfängen der Bandspulen und der Antriebsrolle gleichzeitig angetrieben werden, wobei im Ruhezustand des Bandlaufwerks gleichgroße Andruckkräfte an den Kontaktstellen erzeugt werden und im Betriebszustand an der Kontaktstelle zwischen der bandaufnehmenden Spule und der Antriebsrolle eine größere Andruckkraft eingestellt wird als an der Kontaktstelle zwischen der bandabgebenden Spule und der Antriebsrolle und durch die unterschiedlich großen Andruckkräfte an den Kontaktstellen unterschiedliche Umfangsgeschwindigkeiten der Bandspulen erzeugt werden, die Bandspannung zwischen den Kontaktstellen bewirken. Außerdem betrifft die Erfindung ein Magnetbandlaufwerk zur Durchführung des Verfahrens, mit zwei jeweils auf einem beweglich gelagerten Träger drehbar gehaltenen Magnetbandspulen zum Abgeben und Aufnehmen eines Magnetbandes, mindestens einer mit einem elastischen Umfangsbelag versehenen Antriebsrolle für den gleichzeitigen Antrieb beider Bandspulen an deren Umfang und mit an den beweglichen Trägern angreifenden Andruckmitteln, die für den Andruck der Bandspulen an die Antriebsrolle sorgen.

Bei Magnetbandlaufwerken dieser Art, bekannt beispielsweise aus den US-Patentschriften 3 638 880, 3 093 284, 3 487 175, sind die beiden Magnetbandspulen mit ihren Drehachsen auf Trägern gelagert, die zu einer stationären Antriebsrolle verschiebbar oder schwenkbar sind. Eine Feder, die an den Trägern angreift, zieht die beiden Bandspulen mit ihrer Umfangsfläche für deren gleichzeitigen Antrieb gegen den elastisch verformbaren Umfang der Antriebsrolle. Um den Bandabschnitt zwischen den beiden Kontaktstellen für einen möglichst gleichförmigen Kontakt mit dem Magnetkopf unter konstanter Bandspannung zu halten, kann man, wie in der obengenannten US-Patentschrift 3 093 284 erläutert, die Kontinuität des Masseflusses gummielastischer Schichten, die inkompressibel sind, dazu nutzen, durch höhren Kontaktdruck bei der aufnehmenden Bandspule gegenüber dem bei der abgebenden Spule unterschiedliche Umfangsgeschwindigkeiten des elastischen, die Bandspulen antreibenden Belags der Antriebsrolle an den beiden Kontaktstellen und damit die Spannung des Bandabschnitts zu bewirken. Entsprechend dem Kontinuitätsprinzip beruht dies darauf, daß die Geschwindigkeit des durch Andruck verformten Teils des Belags größer sein muß als die des nicht bzw. weniger verformten Teils.

Zur Erzeugung der unterschiedlichen Andruckkräfte wurde unter Berücksichtigung eines Betriebs des Bandlaufwerks in beiden Richtungen zum Beispiel in der US—A—4 093 150 (DE—A—28 25 112) vorgeschlagen, in einem Bremssystem Schnüre um die Wellen der Bandspulen zu schlingen und diese an einem Ende durch eine erste, zur Antriebsrolle hin ziehende Feder und am anderen Ende durch eine zweite, von der Antriebsrolle weg ziehende Feder zu spannen. Für die Federn sind Anschläge vorgesehen, so daß die während des Laufwerkbetriebs zwischen der Welle der abwickelnden Bandspule und der Schnur auftretende und in Richtung der ersten Feder wirkende Reibungskraft diese an ihrem Anschlag anliegen und die zweite Feder von ihrem Anschlag abheben läßt. Letztere Feder ist dadurch über die Schnur entgegen der an den beiden Trägern angreifenden, den Andruck der Bandspulen an der Antriebsrolle erzeugenden Feder voll wirksam, so daß der Kontaktdruck bei der abwickelnden Spule vermindert wird. Bei der aufnehmenden Bandspule wird die Andruckkraft wegen der dort in der umgekehrten Richtung wirkenden Reibungskraft erhöht.

Ferner wird durch unterschiedliche Federkonstanten bei den Federn das Bremssystems erreicht, daß die Welle der abwickelnden Bandspule durch die Reibung mit der Schnur stärker gebremst wird als die der aufnehmenden Spule.

Das aus den Schnüren, Wellen und Federn bestehende Bremssystem ist durch seinen inbezug auf den Kontaktwickelantrieb symmetrischen Aufbau in beiden Betriebsrichtungen des Laufwerks wirksam.

Schwierigkeiten treten jedoch bei schnellem Richtungswechsel des Bandtransports, wie er bei Laufwerken für Videobandgeräte vorkommt, auf. Während des Abbremsens der Bandspulen bis zum Stillstand und des Anfahrens in der umgekehrten Drehrichtung sinken auch die Reibungskräfte ab bis zum Wert Null und steigen wieder an. Dadurch kann während des Richtungswechsels im Bremssystem nicht die Differenz zwischen den Andruckkräften im erforderlichen Maße und somit die erforderliche Bandspannung gebildet werden, was zur Bildung von Bandschleifen führen kann. Ebenso fehlt die Reibungskraft zur Erzeugung eines Bremsmoments. Nachteilig ist ferner anzusehen, daß durch die Reibung zwischen den Schnüren und Wellen der Bandspulen zusätzlich Energie verbraucht wird. Dies ist besonders für Bandlaufwerke mit Batterieversorgung von Bedeutung, bei denen der Energiebedarf im Interesse einer möglichst langen Betriebszeit mit einem Satz Batterien eingeschränkt werden soll.

Es stellte sich daher die Aufgabe, ein Verfahren zur Erzeugung der Bandspannung in einem nach dem Kontaktwickelprinzip arbeitenden Magnetbandlaufwerk und ein entsprechendes Magnetbandlaufwerk dafür zu entwickeln, bei denen die vorstehend beschriebenen Nachteile vermieden sind und besonders der möglichst geringe Energiebedarf für Batteriebetrieb berücksichtigt ist.

Diese Aufgabe wird dadurch gelöst, daß die unterschiedlich großen Andruckkräfte im Betriebszustand durch eine positive und eine negative Kraft erhalten werden, die dem Betrag nach im wesentlichen gleich groß sind und von einem erzeugten Drehmoment abgeleitet sind, das als Reaktionsmoment dem Rotationsmoment der Antriebsrolle entgegengerichtet ist, und daß die positive Kraft zur Andruckkrafterhöhung an die Kontaktstelle mit der gerade bandaufwickelnden Bandspule und die negative Kraft zur Andruckkraftverringerung an die Kontaktstelle mit der gerade bandabgebenden Bandspule übertragen wird.

In weiterer Ausgestaltung des Verfahrens kann die die Andruckkräfte erhöhende bzw. vermindernde Kraft von dem dem Rotationsmoment der Motorwelle für die Antriebsrolle entgegengerichteten Drehmoment des Motorgehäuses erzeugt werden.

Ein Magnetbandlaufwerk der eingangs definierten Art zur Durchführung des Verfahrens ist in Anspruch 3, angegeben, wenn die Bandspulen mit mindestens einem gespannten Seil oder Band in Verbindung stehen, das über einen zentralen und jeweils in Gegenrichtung zur Antriebsrolle antreibbaren Rotationskörper geführt ist.

Bei einer sehr vorteilhaften Ausführungsform des Magnetbandlaufwerks ist der Rotationskörper mit dem Gehäuse des Motors für die Antriebsrolle verbunden, wobei das Gehäuse drehbar gelagert ist.

Mit geringem technischen Aufwand wird somit erreicht, daß bei der Bildung der Differenz zwischen den Andruckkräften an den Kontaktstellen der abwickelnden und aufnehmenden Bandspule auf das mit Verlustenergie behaftete Reibungsbremssystem gemäß der US—A—40 93 150 verzichtet werden kann.

Von entscheidendem Vorteil ist dabei, daß beim Richtungswechsel des Laufwerkbetriebs auch bei kleinen Drehzahlen der Motorwelle noch das zentral erzeugte Gegenmoment vorhanden ist. Dieses wird beim Umschalten des Motors infolge des sich einstellenden hohen Anlaufstromes entsprechend dem Anlaufen des Motors in der neuen Richtung noch verstärkt. Dadurch ist auch während des Richtungswechsels eine ausreichende Bandspannung gewährleistet. Dabei kann durch eine einstellbare Begrenzung des Anlaufstromes der Ablauf der Richtungsumkehr des Bandlaufs hinsichtlich der Bandspannung optimiert werden.

Weitere praktische Ausbildungen des Laufwerks gehen aus den Patentansprüchen hervor.

Weitere Vorteile und Einzelheiten der Erfindung sind in dem anhand der Zeichnung nachstehend erläuterten Ausführungsbeispiel enthalten.

Es zeigt:
Fig. 1 in der Draufsicht schematisch das Laufwerk mit den Einrichtungen für die Bandspannungserzeugung
Fig. 2 im teilweisen Querschnitt den für den Antrieb der Antriebsrolle und der Bandspannungserzeugung gestalteten Motor und seine Drehlagerung
Fig. 3 in der Draufsicht schematisch eine bevorzugte Ausführungsform des Laufwerks mit Doppelfedern als Andruckmittel

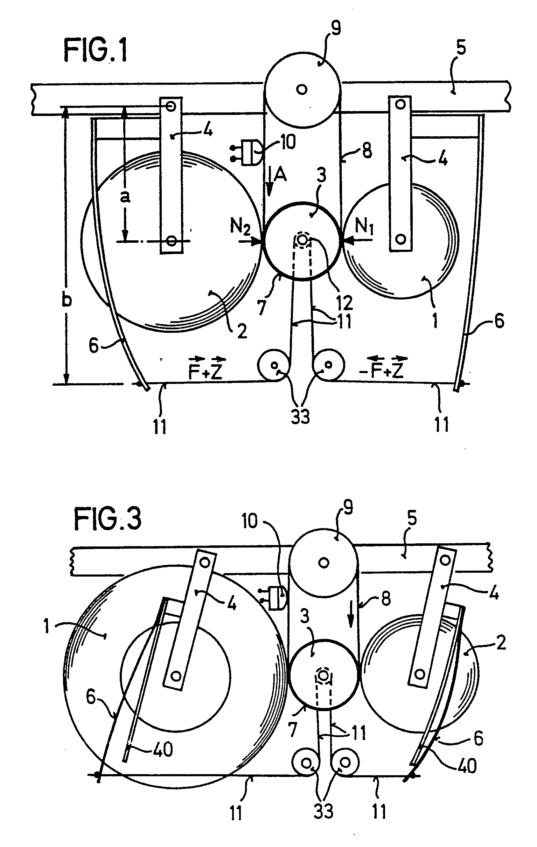

Beim Bandtransport zwischen einer bandabgebenden und einer bandaufnehmenden Magnetbandspule 1 und 2 nach dem Kontaktwickelprinzip werden bekanntlich beide Bandspulen durch Kontaktdruck zwischen deren Umfänge und dem Umfang einer Antriebsrolle 3 gleichzeitig angetrieben (Fig. 1). Die Bandspulen 1, 2 sind auf Trägern 4 drehbar gelagert, die in einem Rahmen 5 verschiebbar oder—wie in vorliegendem Ausführungsbeispiel—schwenkbar gehalten sind. Spannfedern 6, die jeweils an den Trägern 4 befestigt und über ein Seil 11 an ihren freien Enden miteinander verbunden sind, sorgen dafür, daß die beiden Bandspulen 1, 2 mit gleicher Andruckkraft im Ruhezustand an der orstfesten Antriebsrolle 3 anliegen. Bei dem in Figur 1 gezeigten Ausführungsbeispiel bestehen die Spannfedern aus Blattfedern. Selbstverständlich können auch andere Federformen, beispielsweise Schraubenfedern, zum Einsatz kommen, die dann für eine äquivalente Wirkung durch geeignete konstruktive Maßnahmen zwischen Seil und Träger einzugliedern sind.

Am Umfang ist die Antriebsrolle, die von einem Motor (in Fig. 1 nicht sichtbar) im unteren Teil des Laufwerks angetrieben wird, mit einem gummielastischen Belag 7 versehen, damit zur Erzeugung einer Spannung des Bandabschnitts zwischen den beiden Kontaktstellen die auf dem oben geschilderten Prinzip der Kontinuität des Masseflusses beruhende Differenz der Umfangsgeschwindigkeiten der Bandspulen erzeugt werden kann.

Zwischen den Kontaktstellen läuft das Magnetband über Umlenk- und Führungsorgane, beispielsweise eine Umlenkrolle 9. In diesem Bereich sind ein oder mehrere Magnetköpfe 10 für die Bandaufzeichnung bzw. -abtastung angeordnet. Es hat sich gezeigt, daß sich in diesem Bandabschnitt eine konstante Bandspannung von 25 pond (ungefähr 0,25 N) für einen optimalen Band/Kopf-Kontakt einstellen sollte.

Auf das Verfahren und die Einrichtung zur Erzeugung dieser Bandspannung soll nun näher eingegangen werden.

Wie bereits erwähnt, wird eine konstante Bandspannung erhalten, wenn die bandaufnehmende Magnetbandspule (im folgenden kurz Aufwickelspule genannt) stets mit einer Geschwindigkeit umläuft, die gleichförmig höher als die der bandabgebenden Magnetbandspule (im folgenden kurz Abwickelspule genannt) ist. Dies läßt sich dadurch erreichen, daß der elastische Belag 7 der Antriebsrolle 3 an der Kontaktstelle der Aufwickelspule 2 durch höheren Andruck stärker verformt wird als an der Abwickelseite. Die stärkere Verformung bewirkt einen schnelleren Materialfluß im Andruckbereich gegenüber dem weniger bzw. nicht verformten Belag, so daß dieser der Aufwickelspule 2 eine höhere Geschwindigkeit erteilt als es der Geschwindigkeit der Antriebsrolle entsprechen würde. Auch die Abwickelspule erhält einen solchen Vorlauf, wenn durch den Andruck an ihrer Kontaktstelle der Belag der Antriebsrolle verformt wird. Zur Bildung der Bandspannung kommt es dabei darauf an, durch unterschiedlichen Andruck bei der Auf- und Abwickelspule unterschiedliche Umfangsgeschwindigkeiten zur erzeugen.

Um unterschiedliche Andruckkräfte zu erhalten, wird nun das von elektrischen Antrieben bekannte gegendrehende Moment der feststehenden Motorteile—des Stators bzw. des damit verbundenen Gehäuses—dazu benutzt, durch Übertragen einer daraus abgeleiteten Kraft auf die Spannfedern 6 mit Hilfe des diese verbindenden Seils 11 die Andruckkräfte durch diese Kraft an der Andruckstelle für die Aufwickelspule 2 zu erhöhen und an der Andruckstelle für die Abwickelspule 1 zu verringern.

Wie aus Figur 1 ersichtlich, werden die im Ruhezustand des Bandlaufwerks gleichgroßen Andruckkräfte $N_1$ und $N_2$ durch die an den beiden Seilhälften wirkenden Federkräften F und -F und deren Übersetzung auf die Andruckstelle entsprechend den Hebellängen a und b bestimmt, wobei a der Abstand zwischen den Drehlagern der Träger 4 und der Bandspulen 1 und 2 ist und b dem Abstand zwischen den Drehlagern der Träger 4 und den Befestigungspunkten der beiden Seilenden an den Spannfedern 6 entspricht. Da die Federkräfte der beiden Spannfedern entgegengesetzt gerichtet sind, gilt auch $N_1=-N_2$.

Für einen vorgegebenen Betrag N der Andruckkräfte $N_1$, $N_2$ ergibt sich somit für den Ruhezustand des Laufwerks die Beziehung

$$F=\frac{a}{b}N.$$

Im Betriebszustand des Laufwerks tritt im Seil 11 eine Kraft Z auf, die am Drehradius $\gamma_m$ des Motorgehäuses, mit dem Gegendrehmoment $M_m$, auf das Seil übertragen wird. Für die Größe Z gilt dann:

$$Z=\frac{M_m}{\gamma_m}$$

Entsprechend der Transportrichtung des Bandes 8 (Pfeil A) ergibt sich aus dem Bewegungsablauf des Laufwerks, daß die Kraft Z immer zur Abwickelseite hin gerichtet ist, so daß sie auf der Aufwickelseite verstärkend und auf der Abwickelseite vermindernd wirkt. Dadurch ist während des Laufwerkbetriebes

$$N_1=\frac{b}{a}(-F+Z)$$

; daraus folgt $N_2>N_1$

$$N_2=\frac{b}{a}(F+Z)$$

Die größte Differenz zwischen den Andruckkräften $N_1$ und $N_2$ und damit die maximale Bandspannung, bei denen noch ein Kontaktwickelbetrieb gewährleistet ist, stellt sich ein, wenn die Kraft Z dem Betrag nach gleich der Kraft F ist. Dann berühren sich die Abwickelspule 1 und die Antriebsrolle 3 ohne Andruck, während sich der Kontaktdruck bei der Aufwickelspule verdoppelt. Mit den Beziehungen von oben ergibt sich dann:

$$\frac{a}{b}\cdot N=\frac{M_m}{\gamma_m}$$

Daraus erhält man den höchst zulässigen Abstand der Befestigungspunkte der Seilenden an den Spannfedern 6 vom Drehpunkt der Träger 4

$$b=\frac{N\cdot a\cdot \gamma_m}{M_m}$$

Zur Veranschaulichung ein Zahlenbeispiel:

N=4,00 N

a=30 mm

$\gamma_m$=1,40 mm

$M_m$=2,24 mmN

$$b=\frac{4,00\cdot 30\cdot 1,40}{2,24}=75\ mm$$

Aus Gründen der Betriebssicherheit ist es jedoch zweckmäßig, etwa 5% bis 20%, vorzugsweise 10%, unterhalb des Höchstwertes zu bleiben.

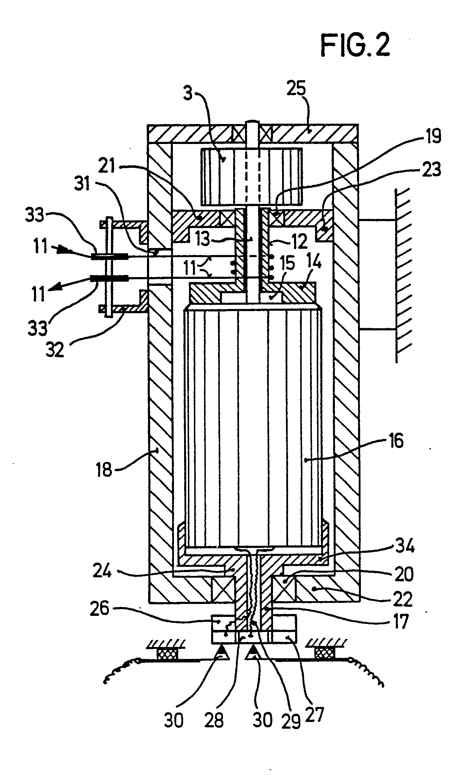

Wie bereits oben angedeutet, wird die Kraft Z durch Haftreibung vom Motorgehäuse auf das Seil 11 übertragen. Selbstverständlich kann anstelle des Seils auch ein Band verwendet werden. Hierzu wird nun das Seil 11 in einer oder mehreren, vorzugsweise in drei Umschlingungen über einen Rotationszylinder 12 geführt, der in Figur 2 gezeigt ist. Entsprechend der oben erwähnten Beziehung

$$Z=\frac{M_m}{\gamma_m}$$

ist der Durchmesser des Zylinders 12 für eine möglichst große Kraft Z möglichst klein zu wählen. Der Zylinder 12, der zum Durchtritt der Rotorwelle 13 für die Antriebsrolle 3 hohl ausgeführt ist, ist an eine Scheibe 14 angeformt, die in ihrem Zentrum ebenfalls eine Öffnung 15 aufweist. Die Scheibe 14 ist an der Stirnseite des Motors, an der die Rotorwelle 13 durchtritt, mit dem Motorgehäuse 16 vorzugsweise mittels Schrauben verbunden. An der anderen Stirnseite des Motors ist ebenfalls eine Hohlwelle 17 vorgesehen, die mit dem Motorgehäuse 16 über eine den Gehäuserand übergreifende Kappe 34 verbunden ist.

Das Motorgehäuse 16 ist mittels des Rotationszylinders 12 und der Hohlwelle 17 in einer mit dem Laufwerkrahmen 5 verbundenen, U-förmigen Halterung 18 drehbar gelagert. Die Kugellager 19 und 20 für die Drehlagerung sind in zentralen Öffnungen einerseits eines Steges 21 und andererseits der Basis 22 des U-förmigen Teils 18 aufgenommen. Der Steg 21 stützt sich mittels seiner abgewinkelten Enden 23 im Paßsitz an den Innenwänden der Halterung 18 ab. Eine Abstufung 24 an der Hohlwelle 17 hält den Motor an der Basis 22 in einer Endlage.

Die Rotorwelle 13 ist in der bevorzugten Ausführungsform des Laufwerks über die Antriebsrolle 3 hinaus für eine zusätzliche Lagerung in einer die Haltung 18 abschließenden und an dieser befestigten Platte 25 verlängert. Dadurch ist ein stabiler und exakter Rundlauf der Antriebsrolle gewährleistet.

Die Hohlwelle 17 ist außerhalb der Halterung 18 durch einen aufgepreßten Ring 26 erweitert, der einen Schleifring 27 aufnimmt, und zentral mit einer Schleifplatte 28 abgeschlossen. Schleifring und Schleifplatte, die elektrisch voneinander isoliert sind, sind mit den in der Hohlwelle 17 verlaufenden Zuleitungen 29 des Motors verbunden, so daß diesem über Schleifkontakte 30 die elektrische Energie zugeführt werden kann.

Bei wenigen auf den gesamten Umspulvorgang entfallenden Umdrehungen des Motorgehäuses 16, die von der Änderung des Abstandes zwischen den Achsen der Bandspulen 1 und 2 herrühren—bekannterweise beruhend auf den sich stetig ändernden Durchmessergrößenverhältnisse der Bandspulen während des Umspulens-, kann die Zuführung der elektrischen Energie anstatt über Schleifkontakte über flexible Kabel direkt zu den Zuleitungen 29 des Motors erfolgen. Die elektrische Verbindung kann auch über isoliert ausgeführte Kugellager 19 und 20 hergestellt werden.

Einer der beiden Schenkel der U-förmigen Halterung 18 weist eine Durchbrechung 31 zur Durchführung der zum Rotationszylinder 12 hin bzw. von diesem weg führenden Seilhälften 11 auf.

In Höhe dieser Durchbrechung sind an Winkeln 32, die am Schenkel befestigt sind, zwei Führungsrollen 33 drehbar gehalten, über die die beiden Seilhälften auf die Spannfedern 6 gelenkt werden.

In einer in der Zeichnung nicht dargestellten raumsparenden Ausführungsform des Laufwerks ist der Motor für die Antriebsrolle 3 mit den Einrichtungen für die Drehlagerung bezüglich der Ebene der Bandspulen und der Antriebsrolle waagrecht angeordnet. Für das Motorgehäuse 16 einerseits und die Antriebsrolle 3 und den Rotationszylinder 12 andererseits müssen dann zwangsläufig getrennte Halterungen für die Drehlagerung vorgesehen werden. Der Antrieb der Antriebsrolle 3 und des Rotationszylinders 12 erfolgt entsprechend der winkligen Lage der Rotationsachsen über Kegelzahnräder, vorzugsweise mit einem Übersetzungsverhältnis 1:1.

Für eine besonders einfache Justierung des Winkelantriebs eignet sich auch biegsame Welle, die mit üblichen und technisch bekannten Mitteln an der Motorachse 13 und an der Achse der Antriebsrolle 3 befestigt ist, während die Drehübertragung vom Motorgehäuse 16 zum Rotationszylinder 12 über eine Reibradverbindung erfolgt.

Wie bereits erläutert, ist die Bandspannung zwischen der Abwickel- und Aufwickelspule konstant, wenn der Unterschied der Umdrehungsgeschwindigkeiten der beiden Spulen konstant ist. Das bedeutet, daß die den Andruck der Bandspulen an die Antriebsrolle, vom dem die Umdrehungsgeschwindigkeiten abhängen, erzeugenden Spannfedern 6 im Bereich des vorstehend erwähnten, während des Umspulvorganges sich ändernden Abstandes zwischen den Achsen der Bandspulen 1 und 2 eine konstante Federkraft F haben müssen, wobei angenommen ist, daß die vom Gegendrehmoment des Motorgehäuses 16 herrührende Kraft Z sich während des Umspulvorganges nicht ändert. Diese Forderung wird weitgehend von Federn erfüllt, die eine weiche Federcharakteristik besitzen.

Derartige Spannfedern haben jedoch den Nachteil, daß deren beim Richtungswechsel des Bandtransports auftretender Hub, ausgelöst durch den Richtungswechsel der Kraft Z, im Gegensatz zu Federn mit harter Charakteristik groß ist, so daß zur Einstellung der der neuen Bandtransportrichtung angepaßten Kräfteverhältnisse relativ viel Zeit benötigt wird, in der ein spannungsloser Zustand des Bandes besteht.

Aus diesem Grund sind in einer bevorzugten in Figur 3 schematisch wiedergegebenen Ausgestaltung des Laufwerks Anschläge 40 für die Spannfedern 6 vorgesehen, die an den Trägern 4 befestigt sind. Die Kraft Z bewirkt, daß die Spannfeder der Aufwickelspule 2 während des gesamten Umspulvorganges an dem ihr zugeordneten Anschlag anliegt und die Spannfeder der Abwickelspule 1 von deren Anschlag abgehoben ist. Durch letztere Spannfeder, die gegen die als festen Punkt anzusehende Kombination Anschlag/erstere Spannfeder arbeitet, ist die weiche Federcharakteristik während des gesamten Bandtransports von einer Bandspule zur anderen gegeben. Es ist zweckmäßig, die Anschläge 40 starr auszuführen.

Beim Richtungswechsel des Bandtransports kehrt sich der vorstehend geschilderte Betriebszustand der Spannfedern 6 um, wobei infolge der Umkehr der Kraft Z die bisher abgehobene Spannfeder jetzt nur noch über den geringen Abstand zu dem ihr zugeordneten Anschlag bewegt werden muß, während die bischer anliegende Spannfeder durch eine ebenfalls geringe Auslenkung abgehoben wird. Das bedeutet, daß durch die starre Wirkung der Anschläge 40 die Spannfedern 6 für die neue Bandtransportrichtung schnell zum Eingriff kommen.

Als Werkstoff für die Spannfedern 6 kommen Federbleche, vorzugsweise Federbandstahl in Betracht. Typischer Wert für die Federcharakteristik der Spannfedern ist eine Federkonstante von $8 \cdot 10^{-2}$ N/mm.

Das erfindungsgemäße Magnetbandlaufwerk ist nicht auf das dargestellte Ausführungsbeispiel beschränkt, sondern kann im Rahmen der Erfindung mit den dem Fachmann geläufigen Mitteln und Kenntnissen in seinem Aufbau variiert werden. Beispielsweise kann das Seil durch zwei getrennte Seilhälften ersetzt werden, die einerseits jeweils an einem Träger oder an einer Spannfeder und in einer oder mehreren Umschlingungen über den Rotationszylinder des Motorgehäuses führend andererseits an jeweils einem Festpunkt oder Spannelement verankert sind.

## Patentansprüche

1. Verfahren zur Erzeugung der Bandspannung in einem nach dem Kontaktwickelprinzip arbeitenden Magnetbandlaufwerk, bei dem eine bandabgebende und eine bandaufnehmende Magnetbandspule (1 bzw. 2) von zumindest einer, mit einem elastisch verformbaren Umfangsbelag (7) versehenen Antriebsrolle (3) durch Kontaktdruck an den Kontaktstellen zwischen den Umfängen der Bandspulen (1 und 2) und der Antriebsrolle (3) gleichzeitig angetrieben werden, wobei im Ruhezustand des Bandlaufwerks gleichgroße Andruckkräfte ($N_1=N_2=N$) an den Kontaktstellen erzeugt werden und im Betriebszustand an der Kontaktstelle zwischen der bandaufnehmenden Spule (2 bzw. 1) und der Antriebsrolle (3) eine größere Andruckkraft eingestellt wird als an der Kontaktstelle zwischen der bandabgebenden Spule (1 bzw. 2) und der Antriebsrolle (3) und durch die unterschiedlich großen Andruckkräfte an den Kontaktstellen unterschiedliche Umfangsgeschwindigkeiten der Bandspulen (1 und 2) erzeugt werden, die Bandspannung zwischen den Kontaktstellen bewirken, dadurch gekennzeichnet, daß die unterschiedlich großen Andruckkräfte ($N_1$ und $N_2$) im Betriebszustand durch eine positive (+Z) und eine negative (−Z) Kraft erhalten werden, die dem Betrag nach im wesentlichen gleich groß sind und von einem erzeugten Drehmoment (Mm) abgeleitet sind, das als Reaktionsmoment dem Rotationsmoment der Antriebsrolle (3) entgegengerichtet ist, und daß die positive Kraft (+Z) zur Andruckkrafterhöhung an die Kontaktstelle mit der gerade bandaufwickelnden Bandspule (2 bzw. 1) und die negative Kraft (−Z) zur Andruckkraftverringerung an die Kontaktstelle mit der gerade bandabgebenden Bandspule (1 bzw. 2) übertragen wird.

2. Verfahren nach Anspruch 1, dadurch gekennzeichnet, daß die die Andruckkräfte erhöhende bzw. vermindernde Kraft von dem dem Rotationsmoment der Motorwelle (13) für die Antriebsrolle entgegengerichteten Drehmoment des Motorgehäuses (16) erzeugt wird.

3. Magnetbandlaufwerk zur Durchführung des Verfahrens nach Anspruch 1 mit zwei jeweils auf einem beweglich gelagerten Träger (4) drehbar gehaltenen Magnetbandspulen (1, 2) zum Abgeben und Aufnehmen eines Magnetbandes (8), mindestens einer mit einem elastischen Umfangsbelag (7) versehenen Antriebsrolle (3) für den gleichzeitigen Antrieb beider Bandspulen (1, 2) an deren Umfang mit an den beweglichen Trägern (4) angreifenden Andruckmitteln (6), die für den Andruck der Bandspulen an die Antriebsrolle sorgen, wobei im Ruhezustand des Bandlaufwerks gleichgroße Andruckkräfte ($N_1=N_2=N$) an den Kontaktstellen erzeugt werden und im Betriebszustand an der Kontaktstelle zwischen der bandaufnehmenden Spule (2 bzw. 1) und der Antriebsrolle (3) eine größere Andruckkraft eingestellt wird als an der Kontaktstelle zwischen der bandabgebenden Spule (1 bzw. 2) und der Antriebsrolle (3) und durch die unterschiedlich großen Andruckkräfte an den Kontaktstellen unterschiedliche Umfangsgeschwindigkeiten der Bandspulen (1 und 2) erzeugt werden, die Bandspannung zwischen den Kontaktstellen bewirken, dadurch gekennzeichnet, daß die Bandspulen (1, 2) mit mindestens einem gespannten Seil oder Band (11) in Verbindung stehen, das über einen zentralen und jeweils in Gegenrichtung zur Antriebsrolle (3) antreibbaren Rotationskörper (12) geführt ist, und daß die unterschiedlich großen Andruckkräfte ($N_1$ und $N_2$) im Betriebszustand durch eine positive (+Z) und eine negative (−Z) Kraft erhalten werden, die dem Betrag nach im wesentlichen gleich groß sind und von einem erzeugten Drehmoment (Mm) abgeleitet sind, das als Reaktionsmoment dem Rotationsmoment des Rotationskörpers (12) entgegengerichtet ist.

4. Magnetbandlaufwerk nach Anspruch 3, dadurch gekennzeichnet, daß der Rotationskörper (12) mit dem Gehäuse (16) des Motors für die Antriebsrolle (3) verbunden ist, wobei das Gehäuse (16) drehbar gelagert ist.

5. Magnetbandlaufwerk nach Anspruch 3 oder 4, dadurch gekennzeichnet, daß das gespannte Seil oder Band (11) in einer oder mehreren Umschlingungen über den Rotationskörper (12) geführt ist.

6. Magnetbandlaufwerk nach einem der Ansprüche 3 bis 5, dadurch gekennzeichnet, daß die Träger (4) unmittelbar oder über die Andruckmittel (6) durch mindestens ein gespanntes Seil oder Band (11), das in einer oder mehreren Umschlingungen über den Rotationskörper (12) des drehbar gelagerten Motorgehäuses (16) geführt ist, miteinander verbunden sind.

7. Magnetbandlaufwerk nach einem der Ansprüche 3 bis 6, dadurch gekennzeichnet, daß an den Trägern (4) für die Bandspulen (1, 2) als Andruckmittel jeweils eine Spannfeder (6) befestigt ist und die freien Enden der beiden Spannfedern durch das Seil oder Band (11) miteinander verbunden sind, wobei dieses durch die Spannfedern im gespannten Zustand gehalten ist.

8. Magnetbandlaufwerk nach Anspruch 7, dadurch gekennzeichnet, daß die Träger (4) für die Bandspulen (1, 2) mit jeweils einem Anschlag (40) für die Spannfedern (6) versehen sind.

9. Magnetbandlaufwerk nach Anspruch 8, dadurch gekennzeichnet, daß die Anschläge (40) für die Spannfedern (6) als Federn mit harter Federcharakteristik ausgebildet sind, während die Spannfedern (6) eine weiche Federcharakteristik aufweisen.

10. Magnetbandlaufwerk nach einem der Ansprüche 3 bis 9, dadurch gekennzeichnet, daß der Motor für die Antriebsrolle (3) bezüglich der Ebene der Bandspulen (1, 2) und der Antriebsrolle waagerecht angeordnet ist, wobei entsprechend der rechtwinkligen Lage der Rotationsachsen der Antrieb der Antriebsrolle und des Rotationskörpers (12) über Kegelzahnräder, vorzugsweise im Übersetzungsverhältnis 1:1, erfolgt.

11. Magnetbandlaufwerk nach Anspruch 10, dadurch gekennzeichnet, daß anstelle der Kegelzahnräder für den Antrieb der Antriebsrolle (3) eine biegsame Welle und für den Antrieb des Rotationskörpers (12) eine Reibradübertragung vorgesehen sind.

## Revendications

1. Procédé d'obtention de la tension de bande dans un mécanisme d'entraînement de bande magnétique fonctionnant selon le principe de l'enroulement par contact, dans lequel une bobine de bande magnétique (1 ou 2) libérant de la bande et une recevant ladite bande sont entraînées simultanément par au moins un galet d'entraînement (3), muni d'un revêtement périphérique (7), déformable élastiquement, grâce à une pression de contact sur la zone de contact comprise entre les périphéries des bobines de bande (1 et 2) et le galet d'entraînement (3), des forces de serrage de même valeur ($N_1 = N_2 = N$) à l'état de repos du mécanisme étant produites aux zones de contact entre la bobine (2 ou 1) recevant de la plus grande étant produite dans la zone de contact entre la bobbine (2 ou 1) recevant de la bande et le galet d'entraînement (3) que dans la zone de contact entre la bobine libérant de la bande (1 et 2) et le galet (3), obtenant ainsi du fait de la différence de valeur entre les forces de serrage aux zones de contact, des vitesses périphériques différentes des bobines de bande (1 et 2) provoquant la tension de bande entre les zones de contact, caractérisé par le fait que les forces de serrage de valeurs différentes ($N_1$ et $N_2$), à l'état de marche, sont obtenues par une force positive ($+Z$) et une force négative ($-Z$) qui, en valeur absolue, sont sensiblement égales et sont dérivées d'un couple produit (Mm) qui, en tant que couple de réaction, est de direction opposée au couple de rotation du galet d'entraînement (3) et la force positive ($+Z$) est transmise pour augmenter la force de serrage à la zone de contact avec la bobine de bande (2 ou 1) en train d'enrouler la bande, alors que la force négative ($-Z$) est transmise, pour réduire la force de serrage à la zone de contact avec la bobine en train de dérouler la bande (1 ou 2).

2. Procédé selon la revendication 1, caractérisé par le fait que la force augmentant ou diminuant les forces de serrage est produite par le couple du carter de moteur (16) de direction opposée au couple de rotation de l'arbre de moteur (13) du galet.

3. Mécanisme d'entraînement de bande magnétique pour la mise en oeuvre du procédé selon la revendication 1, comportant deux bobines de bande magnétique (1, 2) montées rotatives sur un support (4) monté mobile, pour libérer et recevoir une bande magnétique (8), au moins un galet d'entraînement (3) muni d'un revêtement périphérique (7) élastique, pour l'entraînement simultané des deux bobines (1, 2) à leur périphérie et des moyens de poussée (6), attaquant les supports mobiles (4) et assurant le serrage des bobines de bande contre le galet d'entraînement, des forces de serrage de même valeur ($N_1 = N_2 = N$) à l'état de repos du mécanisme étant produites aux zones de contact, et, à l'état de marche, une force de serrage plus grande étant produite dans la zone de contact entre la bobine (2 ou 1) recevant de la bande et le galet d'entraînement (3) que dans la zone de contact entre la bobine libérant de la bande (1 et 2) et le galet (3), obtenant ainsi du fait de la différence de valeur entre les forces de serrage aux zones de contact, des vitesses périphériques différentes des bobines de band (1 et 2) provoquant la tension de bande entre les zones de contact, caractérisé par le fait que les bobines de bande (1, 2) sont reliées par au moins un câble ou bande (11) tendu, qui passe sur un corps rotatif (12) central et entraînable en sens contraire du galet (3) et les forces de serrage de valeurs différentes ($N_1$ et $N_2$), à l'état de marche, sont obtenues par une force positive (+Z) et une force négative (−Z) qui, en valeur absolue, sont sensiblement égales et sont dérivées d'un couple produit (Mm) qui, en tant que couple de réaction, est de direction opposée au couple de rotation du corps de rotation (12).

4. Mécanisme d'entraînement de bande magnétique selon la revendication 3, caractérisé par le fait que le corps de rotation (12) est relié au carter (16) du moteur du galet d'entraînement (3), le carter (16) étant monté pour pouvoir tourner.

5. Mécanisme d'entraînement de bande magnétique selon la revendication 3 ou 4, caractérisé par le fait que le câble ou bande (11) tendu passe, en faisant une ou plusieurs boucles, sur le corps de rotation (12).

6. Mécanisme d'entraînement de bande magnétique selon l'une des revendications 3 à 5, caractérisé par le fait que les supports (4) sont reliés entre eux directement, ou par l'intermédiaire du moyen de poussée (6) grâce à au moins un câble ou bande (11) tendu, qui passe, en une ou plusieurs boucles, sur le corps de rotation (12) du carter (16), monté rotatif, du moteur.

7. Mécanisme d'entraînement de bande magnétique selon l'une des revendications 3 à 6, caractérisé par le fait que sur chacun des supports (4) des bobines de bande (1, 2) est fixé, comme moyen de poussée, un ressort de rappel (6) et les extrémités libres des deux ressorts sont reliées par le câble, ou bande (11), ce dernier étant maintenu tendu par les ressorts de rappel.

8. Mécanisme d'entraînement de bande magnétique selon la revendication 7, caractérisé par le fait que les supports (4) des bobines (1, 2) sont munis chacun d'une butée (40) pour les ressorts (6).

9. Mécanisme d'entraînement de bande magnétique selon la revendication 8, caractérisé par le fait que les butées (40) des ressorts (6) sont agencées en ressort à caractéristiques d'élasticité assez dure, alors que les ressorts de rappel (6) ont une caractéristique d'élasticité molle.

10. Mécanisme d'entraînement de bande magnétique selon l'une des revendications 3 à 9, caractérisé par le fait que le moteur du galet (3) est disposé horizontalement par rapport au plan des bobines (1, 2) et du galet (3), la commande du galet et du corps rotatif (12) s'effectuant, en raison de la position à angle droit de l'axe de rotation, par l'intermédiaire de pignons coniques, de préférence dans un rapport de transmission 1/1.

11. Mécanisme d'entraînement de bande magnétique selon la revendication 10, caractérisé par le fait qu'au lieu de pignons coniques prévus pour la commande du galet (3) un arbre flexible et, pour la commande du corps rotatif (12), une transmission à roue de friction.

**Claims**

1. A process for generating tape tension in a magnetic tape transport apparatus in which a supply reel of tape (1) and a take-up reel of tape (2) are driven simultaneously by at least one capstan (3), possessing a resiliently deformable peripheral portion (7), by contact pressure at the points of contact between the peripheries of the reels of tape (1 and 2) and of the capstan (3), compressive forces of equal magnitude ($N_1=N_2=N$) being produced at the points of contact when the tape transport apparatus is not in operation, and a higher compressive force being produced at the point of contact between the take-up reel (2 or 1) and the capstan (3) than at the point of contact between the supply reel (1 or 2) and the capstan (3) when the transport apparatus is in operation, different peripheral speeds of the tape reels (1 and 2) being produced by the different compressive forces at the contact points, which different speeds generate tension in the tape between the contact points, wherein, when the tape transport apparatus is in operation, the different compressive forces ($N_1$ and $N_2$) are obtained by way of a positive force (+Z) and a negative force (−Z) which are essentially equal in magnitude and derived from a generated torque ($M_m$) which, as a constraining moment, opposes the rotational moment of the capstan (3), and wherein the positive force (+Z) is transmitted in order to increase the compressive force at the point of contact with the reel then serving as take-up reel (2 or 1), and the negative force (−Z) is transmitted in order to decrease the compressive force at the point of contact with the reel then serving as supply reel (1 or 2).

2. A process as claimed in claim 1, wherein the force which respectively increases and reduces the compressive forces is produced by the torque of the motor housing (16) which acts counter to the rotational moment of the motor shaft (13) driving the capstan.

3. A magnetic tape transport apparatus for carrying out the process as claimed in claim 1, comprising two reels of tape (1, 2) rotatably mounted on movable carriers (4), for supplying and taking up a magnetic tape (8), at least one capstan, provided with a resilient peripheral portion (7), for simultaneously driving both tape reels (1, 2), at their peripheries, and biassing means (6) acting on the movable carriers (4) and serving to press the tape reels against the capstan, compressive forces of equal magnitude ($N_1=N_2=N$) being produced at the points of contact when the tape transport apparatus is not in operation, and a higher compressive force being produced at the point of contact between the take-up reel (2 or 1) and the capstan (3) than at the point of contact between the supply reel (1 or 2) and the capstan (3) when the transport apparatus is in operation, different peripheral speeds of the tape reels (1 and 2) being produced by the different compressive forces at the contact points, which different speeds generate tension in the tape between the contact points, wherein the tape reels (1, 2) are associated with at least one tensioned cable or belt (11) which is guided over a central rotating member (12) that can be driven in the opposite direction to that of the capstan (3), and wherein, when the tape transport apparatus is in operation, the different compressive forces ($N_1$ and $N_2$) are obtained by way of a positive force (+) and a negative force (−) which are essentially equal in magnitude and derived from a generated torque ($M_m$) which, as a constraining moment, opposes the rotational moment of the rotating member (12).

4. A magnetic tape transport apparatus as claimed in claim 3, wherein the rotating member (12) is connected to the housing (16) of the motor for the capstan (3), the housing (16) being rotatably mounted.

5. A magnetic tape transport apparatus as claimed in claim 3 or 4, wherein the tensioned cable or belt (11) is wound around the rotating member (12) one or more times.

6. A magnetic tape transport apparatus as claimed in any of claims 3 to 5, wherein the carriers (4) are connected, directly or via the biassing means (6), by at least one tensioned cable or belt (11) which is wound one or more times around the rotating member (12) connected to the rotatably mounted motor housing (16).

7. A magnetic tape transport apparatus as claimed in any of claims 3 to 6, wherein a tension spring (6) is attached to each of the carriers (4) for the tape reels (1, 2), to act as biassing means, and the free ends of the two tension springs are connected to one another by the cable or belt (11) which is kept under tension by the tension springs.

8. A magnetic tape transport apparatus as claimed in claim 7, wherein the carriers (4) for the tape reels (1, 2) are each provided with a stop (40) for the tension springs (6).

9. A magnetic tape transport apparatus as claimed in claim 8, wherein the stops (40) for the tension springs (6) are springs having a hard characteristic, whereas the tension springs (6) have a soft characteristic.

10. A magnetic tape transport apparatus as claimed in any of claims 3 to 9, wherein the motor for the capstan (3) is arranged horizontally relative to the plane of the tape reels (1, 2) and of the capstan, and, in accordance with the right-angled position of the axes of rotation, the capstan and the rotating member (12) are driven via bevel gears, preferably with a transmission ratio of 1:1.

11. A magnetic tape transport apparatus as claimed in claim 10, wherein, instead of the bevel gears, a flexible shaft is provided for driving the capstan (3) and friction wheel means for driving the rotating member (12).

# FIG.1

# FIG.3

# FIG.2